Europäisches Patentamt

European Patent Office

Office européen des brevets

(11) Veröffentlichungsnummer: **0 110 026**
**B1**

(12) **EUROPÄISCHE PATENTSCHRIFT**

(45) Veröffentlichungstag der Patentschrift: **27.12.90**

(51) Int. Cl.⁵: **B 29 C 67/14**

(21) Anmeldenummer: **83108723.4**

(22) Anmeldetag: **05.09.83**

(54) **Verfahren zur Herstellung eines Verbundwerkstoffs.**

(30) Priorität: **20.11.82 DE 3243021**

(43) Veröffentlichungstag der Anmeldung:
**13.06.84 Patentblatt 84/24**

(45) Bekanntmachung des Hinweises auf die
Patenterteilung:
**27.12.90 Patentblatt 90/52**

(84) Benannte Vertragsstaaten:
**FR GB IT**

(56) Entgegenhaltungen:
**DE-A-2 647 821**
**FR-A-2 221 260**
**US-A-3 617 437**

**KUNSTSTOFFE, Band 67, Nr. 12, Dezember
1977, Seiten 739-743, München, DE; H.
RICHTER: "Hybrid-Verbundwerkstoffe mit
gerichteten Kurzfasern"**

(73) Patentinhaber: **DORNIER GMBH
Postfach 1420
D-7990 Friedrichshafen 1 (DE)**

(73) Patentinhaber: **Technochemie GmbH -
Verfahrenstechnik
Gutenbergstrasse 2 Postfach 40
D-6901 Dossenheim (DE)**

(72) Erfinder: **Roth, Siegfried, Ing. grad.
Tobelstrasse 17
D-7777 Salem (DE)**
Erfinder: **Stenzenberger, Horst, Dr.
Ruhweg 65
D-6905 Schriesheim (DE)**

(74) Vertreter: **Landsmann, Ralf, Dipl.-Ing.
Kleeweg 3
D-7990 Friedrichshafen 1 (DE)**

## Beschreibung

Die Erfindung betrifft ein Verfahren zur Herstellung von vorgefertigten Faserverbundwerkstoffen nach dem Oberbegriff des Anspruchs.

Aus "Kunststoffe" Band 67, Nr. 12, Dez. 1977, Seiten 739 bis 743, München, H. Richter "Hybridverbundwerkstoffe mit gerichteten Kurzfasern" ist es bekannt, einen vorgefertigten, plattenförmigen Verbundwerkstoff als Halbzeug zu verwenden, der aus einzelnen mit Fasern verstärkten Kunststoffschichten besteht. Bei diesem Halbzeug sind Glas- und Kohlefasern in Epoxidharz als Matrix suspendiert. Da kein Thermoplast als Matrix verwendet wird, kann das Halbzeug nur so lange verformt werden, als das Harz noch nicht ausgehärtet ist.

Aus der EP 62 142 A oder aus der DE 26 47 821 A ist ein plattenförmiges Faserverbundwerkstoffhalbzeug bekannt, dessen Matrix ein Thermoplast ist und dessen Fasern Kurzfasern sind. Die Verformung erfolgt mit Hitze und Druck. Die Faseranteile sind relativ hoch. Zur Verformung der Halbzeuge werden keine besonderen Lehren angegeben. Bei der Herstellung der Halbzeuge wird das Thermoplast gemäß Ep 62 142 A in Form geschnittener kurzer Fasern eingebracht, gemäß DE 26 47 821 A in einem Lösungsmittel gelöst. Das in der EP 61 142 A offenbarte Verfahren bildet den Oberbegriff des Anspruchs.

Aus der US-A-36 17 437 ist ein Verfahren zur Herstellung von Prepregs mit relativ hohem Fasergehalt bekannt, bei dem in einem viskosen Harz dispergierte Fasern ausgerichtet und miteinander verbunden werden.

Aus der US-A-34 21 959 ist es bekannt, ein plattenförmiges Verbundwerkstoffhalbzeug zwischen Gummischichten durch Druck zu verformen.

Aus Abstract of New Technology PB 81-970 491 ist es bekannt, ein plattenförmiges Verbundwerkstoffhalbzeug zwischen zwei superplastischen Metallfolien anzuordnen und durch Gasdruck zu verformen.

Aus der GB-PS 1 485 586 oder dem Royal Aircraft Establishment Technical Report 76140 sind film-stacking-Verfahren an sich bekannt. Sie sind dort aber nur für andere als die beanspruchten Harze und für fest aufgewickelte Endlosfasern oder Gewebe offenbart.

Aufgabe der Erfindung ist es, das Verfahren der EP 61 142 A dahingehend zu verbessern, daß eine gleichmäßigere Harz/Faserverteilung erreicht wird, die für hohe Festigkeit und Steifigkeit sorgt.

Diese Aufgabe wird erfindungsgemäß dadurch gelöst, daß der Kunststoff in Folienform eingesetzt wird, wobei die im Anspruch 1 angegebenen Kunststoffe eingesetzt werden.

Die Kurzfasern können aus Kohlenstoff, Glas, Keramik, Metall und/oder synthetischen Stoffen oder Mischungen davon bestehen.

Die erfindungsgemäß hergestellten, vorgefertigten, mit orientierten Kurzfasern verstärkten, flächigen ebenen Thermoplaste bzw. Tafeln können über ein Heißpreß- und/oder Heißformverfahren zu komplexen flächig bzw. sphärisch *gekrümmten Produkten* verformt werden. Als Matrixharz wird ein thermoplastisches Harz mittleren Molekulargewichts verwendet, wie Polyamidimid, Polyhydantoin, Polyesterimid, Polymid, Polyphenylchinaoxalin, Polybenzimidazol oder Polybenzoxazol oder ein Polyester.

Mit den erfindungsgemäß hergestellten Werkstoffen kann ein Tiefziehen auch bei vergleichbar hohen Fasergehalten durchgeführt werden. Es sind Produkte mit komplexer Geometrie herstellbar, welche sowohl eine kostengünstige Fertigung infolge kurzer Preßzeiten ermöglichen als auch durch die orientierten Kurzfasern und hohen Fasergehalte über hohe Festigkeiten und Steifigkeiten verfügen.

Der Verbundwerkstoff ist durch Heißpreßverfahren, z.B. Stempel oder Walzen als plattenförmiges oder endloses Halbzeug herstellbar.

Die Harzimprägnierung eines derartigen "organischen Bleches" erfolgt erfindungsgemäß durch die sogenannte film-stacking (-stapel-)-Methode, wobei orientierte Kurzfasergelege und Folien der thermoplastischen Harze in einem Vakuumsack alternierend geschichtet, anschließend unter Vakuum und Druck langsam auf die Schmelztemperatur des Thermoplasten erhitzt und danach unter Vakuum und Druck langsam auf eine Temperatur unterhalb des Glaspunktes des Thermoplasten abgekühlt und entformt wird. Die filmstacking-Methode ist auch einsetzbar, wenn die thermoplastische Matrix in geeigneten organischen Lösungsmitteln unlöslich ist. Für die Weiterverarbeitung solchermaßen hergestellter, mit orientierten Kurzfasern gefüllten Platten eignen sich Heißpreß- und/oder Heißformverfahren.

Das Herstellen eines Tiefziehteiles bzw. einer Platte erfolgt in Teilschritten:

Prepregherstellung

Preßung

Tiefziehen.

Anhand eines Beispieles ist im folgenden die Herstellung von aus Kurzfasern verstärkten Verbundwerkstoffen beschrieben und durch eine Skizze eines dazu verwendeten Werkzeuges erläutert:

Beispiel

Unidirektionale, unkompaktierte Prepregs werden in z.B. 15 × 15 cm große Stücke geschnitten und in der Orientierung 90, 0, 0, 90 Winkelgrad geschichtet und zwischen Aluminiumfolien in einer Plattenpresse kompaktiert. Dazu wird die Plattenpresse auf 330°C vorgeheizt und das Prepreggelege zwischen die beheizten Platten der Presse unter Kontaktdruck gelegt. Nach ausreichender Druckerwärmung des Prepregstapels wird die Presse geschlossen und das Gelege bei 40 Kp/cm² kompaktiert. Nach 5 Minuten wird unter Druck auf 100°C abgekühlt und entformt. Dabei wird eine 0,75 mm dicke dichte Platte erhalten, welche ein Flächengewicht von 1000 ± 70 g/ m² aufweist.

Aus nachstehender Skizze ist eine Möglichkeit des Warmdruck-Tiefziehens ersichtlich. Eine C-Faser-Kunststoffplatte (organisches Blech) ist zusammen mit einer vakuumdichten, als Druckstempel wirkenden Gummidecke 2 und oberen und unteren Dichtringen 3 durch einen von oben wirkenden Spannring 4 auf ein mit einer Konturform 5 versehenes Formwerkzeug 6 gespannt. Zur Evakuierung der Konturform 5 ist das Formwerkzeug mit Kanälen 7 und einem Vakuumanschluß 8 versehen.

Das Formwerkzeug 6 wird zusammen mit dem Werkstück, der C-Faser-Kunststoffplatte 1 in einem in der Skizze nicht dargestellten Autoklaven auf die Verformungstemperatur von ca. 220°C aufgeheizt, wobei mit Hilfe des in der Konturform 5 erzeugten Vakuums und einem auf den Spannring 4 und das Werkstück bzw. die Platte 1 wirkenden Druck 9 von ca. 100 N/cm² diese verformt wird.

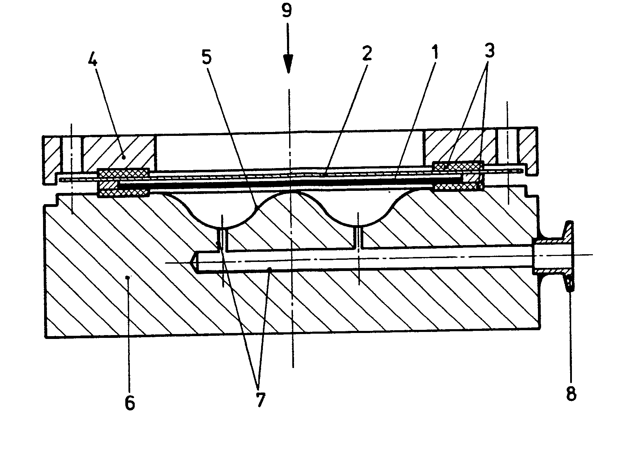

## Patentanspruch

Verfahren zur Herstellung eines unter Anwendung von Druck und bei erhöhter Temperatur verformbaren vorgefertigten platten oder bandförmigen Verbundwerkstoffs, gebildet aus mit Fasern verstärkten thermoplastischen Kunststoffschichten mit hohem Faservolumenanteil, wobei die in den Schichten enthaltenen Fasern unidirektional orientierte Kurzfasern sind, die einzelnen Schichten im Verbund in oder teilweise in unterschiedlicher Orientierung, bezogen auf die Faserrichtung, angeordnet sind und der Verbundwerkstoff ein Faservoluem von ca. 40-80%, vorzugsweise bis 65% aufweist, dadurch gekennzeichnet, daß der Kunststoff in Folienform eingesetzt wird, und daß als Thermoplast einer der folgenden Stoffe verwendet wird: Polyamidimid, Polyhydantoin, Polyesterimid, Polymid, Polyphenylchinaoxalin, Polybenzimidazol, Polybenzoxazol oder ein Polyester.

## Revendication

Procédé de fabrication d'un materiau composite préfabriqué, sous forme de plaques ou de bandes, déformable par application de pression et à température élevée, constitué de couches de matière plastique thermoplastique renforcée à l'aide de fibres avec une proportion élevée en volume de fibres, les fibres contenues dans les couches étant des fibres courtes orientées de façon unidirectionnelle, les différentes couches du matériau composite étant disposées selon une orientation différente ou partiellement différente par rapport à la direction des fibres et le matériau composite comportant un volume de fibres d'environ 40 à 80%, de préférence jusqu'à 65%, caractérisé en ce que la matière plastique est mise en place sous forme de feuilles, et en ce qu'on utilise, en tant que matière thermoplastique, une des substances suivantes: polyamideimide, polyhydantoïne, polyesterimide polyimide, polyphénylquinoxaline, polybenzimidazole, polybenzoxazole ou un polyester.

## Claim

Method for producing a workable, prefabricated plate or strip like composite, using pressure and at a high temperature, which composite is formed of thermoplastic plastics material layers reinforced with fibres with a high fibre volume, the fibres contained in the layers being unidirectional oriented short fibres, the individual layers being disposed in the composite formation in different directions or partially in different directions, in relation to the fibre direction, and the composite having a fibre volume of approximately 40 to 80%, and preferably up to 65%, characterised in that the plastics material is used in the form of foils and in that one of the following materials is used as the thermoplastic material: polyamidimide, polyhydantoin, polyesterimide, polymide, polyphenylquinoxaline, polybenzimidazole, polybenzoxazole or a polyester.